# EUROPÄISCHE PATENTSCHRIFT

(11) **EP 3 310 637 B1**
(45) Veröffentlichungstag und Bekanntmachung des Hinweises auf die Patenterteilung: **09.03.2022**
(21) Anmeldenummer: 16750127.9
(22) Anmeldetag: 27.07.2016
(51) Int. Cl.: B61K 9/02

(54) **PRÜFEINRICHTUNG UND VERFAHREN ZUR ÜBERPRÜFUNG EINES DEFINIERTEN PROFILS VON EINEM ZUGVERBAND AUS FAHRZEUGEN, INSBESONDERE SCHIENENFAHRZEUGEN**
TESTING DEVICE AND METHOD FOR CHECKING A DEFINED PROFILE OF A TRAIN OF VEHICLES, IN PARTICULAR RAIL VEHICLES
DISPOSITIF DE CONTRÔLE ET PROCÉDÉ DE CONTRÔLE D'UN PROFIL DÉFINI D'UN CONVOI COMPOSÉ DE VÉHICULES, NOTAMMENT DE VÉHICULES FERROVIAIRES

(30) Priorität: 14.08.2015 DE 102015215572
(43) Veröffentlichungstag der Anmeldung: 25.04.2018
(73) Patentinhaber: Siemens Mobility GmbH, 81739 München (DE)
(72) Erfinder: BAIER, Torsten, 38315 Schladen (DE)
(86) Internationale Anmeldenummer: PCT/EP2016/067859
(87) Internationale Veröffentlichungsnummer: WO 2017/029084

(56) Entgegenhaltungen:
- DE-A1- 4 015 086
- DE-A1-102009 043 215
- DE-C1- 19 910 795
- NL-A- 7 605 264

## Beschreibung

Die Erfindung betrifft eine Prüfeinrichtung zum Überwachen eines definierten Profils von einem Zugverband aus Fahrzeugen, insbesondere Schienenfahrzeugen, mit wenigstens einer Sensoreinrichtung, die zum Detektieren einer Einhaltung oder Verletzung des Profils ausgebildet ist, wobei die Sensoreinrichtung am Zugverband anbringbar ausgebildet ist.

Die Erfindung betrifft weiter ein Verfahren zur Überprüfung eines definierten Profils von einem Zugverband aus Fahrzeugen, insbesondere Schienenfahrzeugen, bei dem eine Einhaltung oder Verletzung des Profils detektiert wird.

In der DE 199 10 795 C1 ist ein Verfahren und eine Vorrichtung zur Kollisionswarnung beschrieben.

Gemäß rechtlichen und betrieblichen Vorgaben sind beispielsweise Betreiber von Schienenfahrzeugen auf Bahngleisen verpflichtet, sicherzustellen, dass die Schienenfahrzeuge und alle mit ihnen verbundenen Einrichtungen, wie beispielsweise auf die Schienenfahrzeuge geladene Güter, die Lichtraumprofile der genutzten Bahngleise nicht verletzen. Wird diese Vorgabe nicht erfüllt, so besteht die Gefahr von Unfällen mit Sach- und/oder Personenschäden.

Eine Prüfeinrichtung der eingangs genannten Art ist beispielsweise in der DE 40 15 086 A1 beschrieben, bei der der Zugverband an einem sogenannten Nullgleis von einem Messportal überprüft wird. Allerdings hat die Einrichtung der DE 40 15 086 A1 den Nachteil, dass nach der Prüfung auftretende Verletzungen des Lichtraumprofils, beispielsweise durch ein Verschieben der Ladung, nicht erfasst werden können. Dieses Problem wird beispielsweise durch die Vorrichtung der DE 10 2009 043 215 A1 gelöst, bei der das Lichtraumprofil bei der Vorbeifahrt des Zugverbands durch Sensoren entlang der Fahrstrecke geprüft wird. Allerdings ist diese Prüfung aufwendig, wenn der Zugverband entlang der gesamten Fahrstrecke überprüft werden soll.

Daher ist es die Aufgabe der vorliegenden Erfindung, eine Prüfeinrichtung und ein Verfahren der eingangs genannten Art bereitzustellen, mit denen eine Überprüfung des Lichtraumprofils eines Zugverbands entlang der Fahrstrecke auf möglichst einfache Weise möglich ist.

Die eingangs genannte Prüfeinrichtung löst die genannte Aufgabe dadurch, dass die Sensoreinrichtung zum Detektieren vom Zugverband aus ausgebildet ist.

Das oben genannte Verfahren löst die Aufgabe dadurch, dass die Prüfeinrichtung eine Auswerteeinrichtung aufweist, die zum Auswerten eines von der Sensoreinrichtung ermittelten und für die Einhaltung oder Verletzung des Profils repräsentativen Prüfsignals wenigstens in Abhängigkeit von einer Ausrichtung des Zugverbands ausgebildet ist. Dies hat den Vorteil, dass die Prüfeinrichtung selbständig erkennt, wenn oder wann eine Detektierung des Profils durch die Sensoreinrichtung nicht möglich beziehungsweise fehlerhaft ist. Beispielsweise würde die Sensoreinrichtung bei einer Kurvenfahrt die Verletzung des Lichtraumprofils durch einen hinterer Waggon des Zugverbands melden, da die innenliegenden Sensoren diese nach hinten schauend detektieren würden. Durch die erfindungsgemäße Auswerteeinrichtung können Fehlmessungen, die durch den Streckenverlauf bedingt sind, auf einfache Weise ausgeschlossen werden. So erfolgt die erfindungsgemäße Überprüfung des Lichtraumprofils während der Fahrt unter Berücksichtigung der dynamischen Bewegung der Fahrzeuge des Zugverbands entlang der Fahrstrecke. Dies ist beispielsweise ein Gegensatz zu der Einrichtung der DE 40 15 086 A1, die ihre Messung auf einem nahezu idealen Gleisabschnitt durchführt und damit keine Aussage zur Einhaltung des Profilraums entlang der zu befahrenden Strecke erlaubt.

Die erfindungsgemäße Lösung hat weiterhin den Vorteil, dass lediglich eine Prüfeinrichtung pro Zugverband nötig ist, um die Einhaltung des Lichtraumprofils oder eines anderen definierten Profils durchzuführen. Hierdurch lässt sich eine effektive und trotzdem konstruktiv einfache Überprüfung durchführen, deren Materialaufwand und Kosten gegenüber den Vorrichtungen aus dem Stand der Technik deutlich geringer ist. Ferner kann durch die erfindungsgemäße Lösung eine kontinuierliche Überprüfung des Profils stattfinden, da die Prüfeinrichtung am Zugverband angeordnet ist, somit mitgeführt wird und ständig zur Verfügung steht. Durch die erfindungsgemäße Lösung wird der Triebfahrzeugführer des Zugverbands entlastet, da die Überprüfung des Lichtraumprofils während der Fahrt nicht mehr ihm allein obliegt. Vielmehr wird er durch die erfindungsgemäße Lösung unterstützt, die automatisiert durchgeführt werden kann. Bei einer detektierten Verletzung des Lichtraumprofils kann beispielsweise ein Alarmsignal an den Triebfahrzeugführer ausgegeben werden oder auch eine automatisierte Bremsung des Zugverbands eingeleitet werden. Die Sensoreinrichtung kann bei der erfindungsgemäßen Lösung lediglich an einem einzigen Fahrzeug des Zugverbandes, beispielsweise dem Triebfahrzeug, angeordnet werden. So muss die Prüfeinrichtung beim Ändern des Zugverbands nicht verändert werden.

Um die Ausrichtung des Zugverbands auf einfache Weise zu erfassen, weist die Prüfeinrichtung eine Ausrichtungseinheit, die zum Ermitteln der Ausrichtung des Zugverbands oder wenigstens eines Fahrzeugs des Zugverbands ausgebildet ist. Die Ausrichtungseinheit kann die Ausrichtung des Zugverbands beispielsweise durch entsprechende Sensoren oder alternativ auch durch die Auswertung von Kartenmaterial der Fahrstrecke kombiniert mit einer Positionserkennung, beispielsweise über GPS-Koordinaten, ermitteln.

Die erfindungsgemäße Lösung kann durch vorteilhafte Ausgestaltungen weiterentwickelt werden, die im Folgenden beschrieben sind.

Die Ausrichtungseinheit kann in einer vorteilhaften Ausgestaltung einen Kurvensensor umfassen, der zum Ermitteln einer Kurvenfahrt von wenigstens einem Fahrzeug des Zugverbands ausgebildet ist. Dies hat den Vorteil, dass eine Kurvenfahrt unabhängig von anderen Systemen, wie beispielsweise GPS-Sensoren, ermittelt wird und die erfindungsgemäße Prüfeinrichtung dadurch autark arbeiten kann. Ferner kann die Ausrichtungseinheit einen Neigungssensor umfassen, der zum Ermitteln einer Neigung von wenigstens einem Fahrzeug des Zugverbands ausgebildet ist. Der Neigungssensor ermittelt beispielsweise, wenn der Zugverband durch eine Senke oder über einen Hügel fährt und dadurch eine Überprüfung des Profils durch die Sensoreinrichtung fehlerhaft ist.

Ferner kann die Ausrichtungseinheit einen Lagesensor umfassen, der eine Lage wenigstens eines Fahrzeugs des Zugverbands relativ zum Gleis ermittelt. Die Lage der Fahrzeuge des Zugverbands zum Gleis kann ebenfalls einen Einfluss auf die Verwendbarkeit der Prüfsignale der Sensoreinrichtung haben.

Um beispielsweise Kurvenfahrten besonders einfach ermitteln zu können, kann die Ausrichtungseinheit ein Gyroskop aufweisen.

In einer vorteilhaften Ausgestaltung kann die Sensoreinrichtung wenigstens einen Profilsensor zum Ermitteln der Außenkontur wenigstens eines Fahrzeugs des Zugverbands aufweisen. Dies hat den Vorteil, dass durch die Ermittlung der Außenkontur und den Vergleich mit dem zulässigen Profil die Einhaltung oder Verletzung des Profils leicht detektiert werden kann. Dabei können die Prüfsignale der Sensoreinrichtung beispielsweise mit Bildern eines zulässigen Lichtraumprofils verglichen werden.

Ferner kann die Prüfeinrichtung wenigstens eine zum Speichern von Prüfsignalen ausgebildete Speichereinrichtung umfassen. Dies hat den Vorteil, dass Prüfsignale der Sensoreinrichtung zunächst kontinuierlich abgespeichert werden können, wobei die Prüfsignale mit einem Zeitstempel ihrer Messung versehen sind. Anschließend können die Prüfsignale ausgewertet werden, deren Zeitstempel in einen Bereich fallen, in dem die Ausrichtung des Zugverbands für eine Überprüfung des Profils geeignet war.

Um die Ergebnisse der Profilüberwachung beispielsweise an zentraler Stelle zu sammeln, kann die Prüfeinrichtung wenigstens eine zum Übertragen, insbesondere zum drahtlosen Übertragen, von Prüfsignalen ausgebildete Übertragungseinrichtung aufweisen. So können beispielsweise Warnungen oder Alarme elektrisch oder datentechnisch zentral erfasst und in geeigneten Systemen verarbeitet werden. Es kann beispielsweise eine Übertragung an eine Zentrale mittels bekannter Übertragungstechniken erfolgen, wie beispielsweise CT Mobile TSM-Technik, Datenfunk, GSM oder ähnlichem.

Um die Überprüfung des Profils effektiv durchzuführen, kann die Sensoreinrichtung zum Detektieren in der Längsrichtung des Zugverbands ausgebildet sein. Ein Detektieren in der Längsrichtung hat den Vorteil, dass damit bei gerader Ausrichtung der gesamte Zugverband erfasst werden kann.

Die Erfindung betrifft auch ein Fahrzeug, insbesondere ein Schienenfahrzeug, aus einem Zugverband, das die erfindungsgemäße Prüfeinrichtung in einer der oben genannten Ausführungsformen aufweist.

Um das definierte Profil des Zugverbands auf besonders einfache Weise messen zu können, kann die Sensoreinrichtung der Prüfeinrichtung mit einem Abstand zur Außenkontur des Fahrzeugs angeordnet sein. Da das Lichtraumprofil eines Zugverbands größer ist als die Außenkontur der Fahrzeuge, insbesondere des Triebfahrzeugs, kann die Erfindung durch diese Weiterbildung auf einfache Weise implementiert werden.

In einer vorteilhaften Ausgestaltung des erfindungsgemäßen Verfahrens kann ein ermitteltes und für die Einhaltung oder Verletzung des Profils repräsentatives Profilsignal wenigstens in Abhängigkeit von einer Ausrichtung des Zugverbands ausgewertet werden. Diese Ausführungsform des Verfahrens hat die gleichen Vorteile, wie die oben beschriebene entsprechende Ausführungsform der erfindungsgemäßen Prüfeinrichtung.

Die Erfindung wird im Folgenden mit Bezug auf die beispielhafte Ausführungsform in den beigefügten Zeichnungen erläutert.

Es zeigen:
- Figur 1: eine schematische Darstellung eines Zugverbands mit einer beispielhaften Ausführungsform der erfindungsgemäßen Prüfeinrichtung;
- Figur 2: eine schematische Darstellung eines Triebfahrzeugs aus dem Zugverband in Figur 1 mit der beispielhaften Ausführungsform der erfindungsgemäßen Prüfeinrichtung;
- Figur 3: eine schematische perspektivische Darstellung des erfindungsgemäßen Fahrzeugs aus Figur 2;
- Figur 4: eine schematische Darstellung einer beispielhaften Ausführungsform der erfindungsgemäßen Prüfeinrichtung.

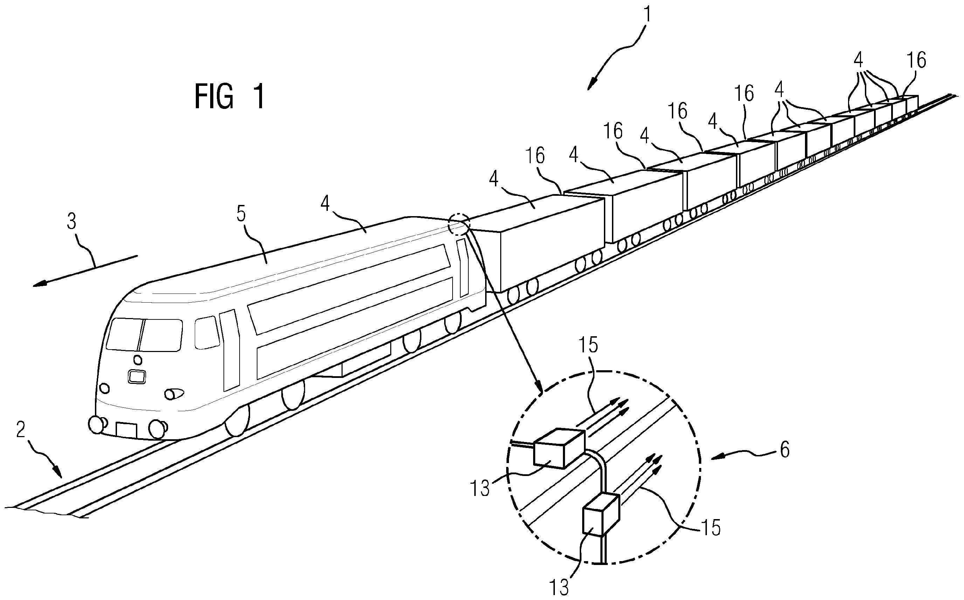

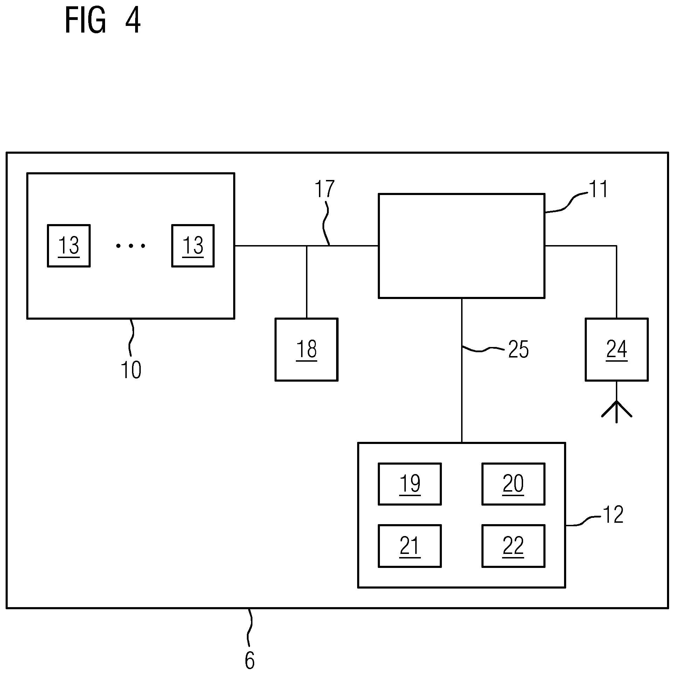

Im Folgenden wird die Erfindung mit Bezug auf die beispielhafte Ausführungsform in den Figuren 1 bis 4 beschrieben.

Figur 1 zeigt einen Zugverband 1, der sich auf einer Fahrstrecke 2 in einer Fahrtrichtung 3 bewegt. Der Zugverband 1 besteht aus einer Vielzahl von miteinander verbundenen Fahrzeugen 4, wobei das vorderste Fahrzeug 4 als ein Triebfahrzeug 5 ausgebildet ist. Die übrigen Fahrzeuge 4 sind hier beispielsweise als Güterwaggons dargestellt. In der beispielhaften Ausführungsform der Figuren 1 bis 4 weist das Triebfahrzeug 5 des Zugverbands 1 eine Prüfeinrichtung 6 zum Überwachen eines definierten Profils 7 des Zugverbands 1 auf. Bei der beispielhaften Ausführungsform in den Figuren 1 bis 4 ist das Profil 7 kleiner als ein zulässiges Lichtraumprofil 8 für den Zugverband 1 und liegt innerhalb von diesem Lichtraumprofil 8. Bei der beispielhaften Ausführungsform der Figuren 1 bis 4 sind die Fahrzeuge 4 Schienenfahrzeuge und das Triebfahrzeug 5 ist eine Lokomotive, die den Zugverband 1 auf der mit Gleisen 9 ausgebildeten Fahrstrecke 2 antreibt.

Die Prüfeinrichtung 6 weist eine Sensoreinrichtung 10, eine Auswerteeinrichtung 11 und eine Ausrichtungseinheit 12 auf.

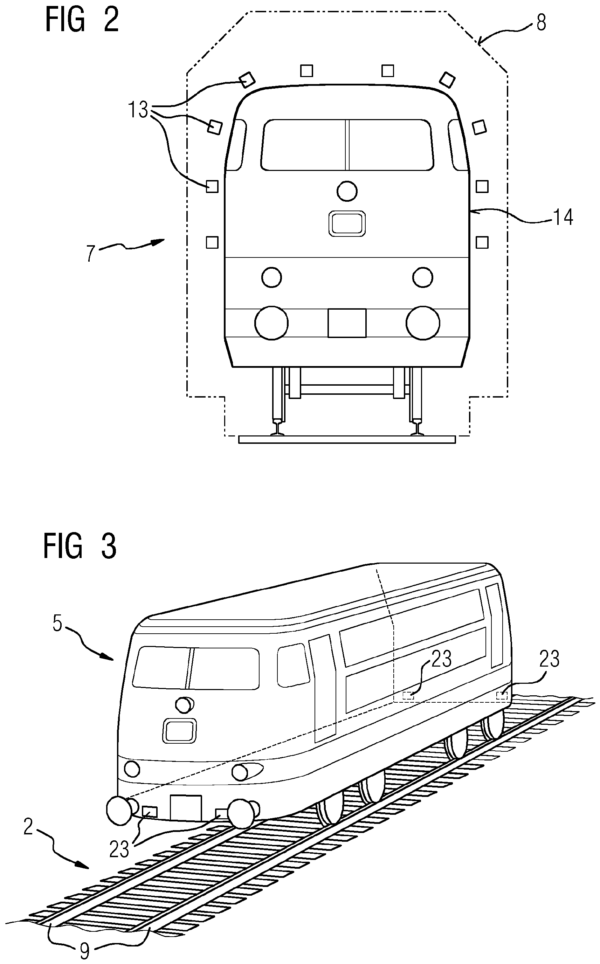

Die Sensoreinrichtung 10 umfasst mehrere Profilsensoren 13, die wie in Figur 2 dargestellt in dieser Ausführungsform entlang des definierten Profils 7 am Triebfahrzeug 5 angebracht sind. Da eine Außenkontur 14 des Triebfahrzeugs 5 kleiner als das Profil 7 ist, sind die Profilsensoren 13 zumindest teilweise mit einem Abstand zur Außenkontur 14 am Triebfahrzeug 5 angebracht. Die Profilsensoren 13 können beispielsweise über nicht dargestellte Befestigungsarme mit dem Fahrzeug verbunden sein.

Die Profilsensoren 13 sind beispielsweise als Videokameras, Kurzwellenstrahler, Laser oder Radarsensoren ausgebildet und "blicken" vom Triebfahrzeug 5 entgegen die Fahrtrichtung nach hinten zu den zu überwachenden Fahrzeugen 4 des Zugverbands 1. Die "Blickrichtung" der Profilsensoren 13 ist im Detailausschnitt der Figur 1 durch Linien 15 visualisiert und verläuft im Wesentlichen in der Längsrichtung es Zugverbands 1. Die Profilsensoren 13 sind in der beispielhaften Ausführungsform der Figuren 1 bis 4 autark arbeitend ausgebildet.

Alternativ könnte die Sensoreinrichtung 10 auch zusätzlich Empfänger 16 aufweisen. In diesem Fall wären die Profilsensoren 13 als aktive Sender ausgebildet, die mit den Empfängern 16 zusammenarbeiten. Im Betrieb würden die Profilsensoren 13 auf die zugeordneten Empfänger 16 blicken und so die Außenkontur der Fahrzeuge 4 ermitteln, die dem Triebfahrzeug 5 folgen. Beispielsweise bei sehr langen Zugverbänden könnte so die Messung auch abschnittweise aufgebaut werden. Dazu würden dann die Empfänger 16den Abschluss eines Messabschnitts bilden. Das dem Fahrzeug mit den Empfängern 16 nachfolgende Fahrzeug könnte dann mit weiteren Profilsensoren für den nächsten Abschnitt ausgestattet sein. Fahrzeuge 4 können hier sowohl ein Triebfahrzeug, beispielsweise eine Lokomotive oder ein nicht angetriebenes Fahrzeug, wie ein Wagon sein.

Die erfindungsgemäße Sensoreinrichtung 10 ist bei der beispielhaften Ausführungsform in den Figuren 1 bis 4 am Triebfahrzeug 5 angebracht, so dass die Prüfeinrichtung 6 auch bei einer Änderung des Zugverbands 1, beispielsweise durch ein An- oder Abkuppeln von Fahrzeugen 4, einsatzfähig bleibt.

Durch die erfindungsgemäße Prüfeinrichtung 6 kann eine kontinuierliche Prüfung des definierten Profils 7 während der Fahrt erfolgen. Da das definierte Profil 7 bei der Ausführungsform der Figuren 1 bis 4 kleiner als das vorgeschriebene Lichtraumprofil 8 ist, wird gleichzeitig auch die Einhaltung des vorgeschriebenen Lichtraumprofils 8 geprüft.

Da die Profilsensoren 13 bei bestimmter Ausrichtung des Zugverbands 1, wie beispielsweise einer Kurvenfahrt, keine für eine Einhaltung oder Verletzung des Profils 8 repräsentativen Prüfsignale liefern, ist die Auswerteeinrichtung 11 erfindungsgemäß zum Auswerten der von der Sensoreinrichtung 10 ausgegebenen Prüfsignale 17 in Abhängigkeit von der Ausrichtung des Zugverbands 1 ausgebildet. So können die Prüfsignale 17, die nicht repräsentativ sind, quasi ausgeblendet werden. Alternativ könnte die Sensoreinrichtung 10 von der Auswerteeinrichtung 11 auch nur bei geeigneter Ausrichtung aktiviert werden.

Die von den Profilsensoren 13 gelieferten Prüfsignale 17 werden bei der beispielhaften Ausführungsform der Figuren 1 bis 4 in einer Speichereinrichtung 18 abgelegt. Dabei umfassen die Prüfsignale 17 Bilder oder Messdaten, die von den Profilsensoren je nach Ausführung ermittelt worden sind, die mit einem Zeitstempel ihrer Messung versehen sind.

Die Ausrichtungseinheit 12 umfasst mehrere Sensoren, um eine aktuelle Ausrichtung des Zugverbands zu ermitteln. Bei der beispielhaften Ausführungsform der Figuren 1 bis 4 weist die Ausrichtungseinheit 12 einen Kurvensensor 19, einen Neigungssensor 20, einen Lagesensor 21 und ein Gyroskop 22 auf.

Der Kurvensensor 19 registriert eine Kurvenfahrt des Zugverbands 1 bzw. des Triebfahrzeugs 5, an dem er angeordnet ist. Durch die ermittelte Kurvenfahrt des Triebfahrzeugs 5 kann auf die Kurvenfahrt des gesamten Zugverbands 1 geschlossen werden. Während einer Kurvenfahrt des Zugverbands 1 können die Profilsensoren 13 das Profil 7 nicht zuverlässig prüfen, weil die hinteren Fahrzeuge 4 den Blick der Profilsensoren 13 bedingt durch die Kurvenfahrt verfälschen. Der Kurvensensor 19 kann beispielsweise ein Gyroskop 22 umfassen, durch das eine Kurvenfahrt auf einfache Weise registriert werden kann.

Der Neigungssensor 20 ermittelt eine Neigung des Triebfahrzeugs 5 zu dem folgenden Fahrzeug 4 des Zugverbands 1, die beispielsweise beim Durchfahren einer Senke oder beim Überfahren eines Hügels auftritt. Bei einer solchen Ausrichtung des Zugverbands 1 können die Profilsensoren 13 nicht zuverlässig die Außenkontur erfassen und das Profil 7 überprüfen. Also sind die Prüfsignale 17 der Profilsensoren 13 in dieser Ausrichtung des Zugverbands 1 für eine Einhaltung oder Verletzung des Profils 7 nicht repräsentativ.

Die Prüfsignale 17 können auch zusätzlich in einem definierten Zeitraum vor und/oder nach einer ermittelten störenden Ausrichtung ausgeblendet werden. So wird beispielsweise die Länge des Zugverbandes 1 berücksichtigt.

Der Lagesensor 21 ermittelt eine Lage des Triebfahrzeugs 5 relativ zu den Gleisen 9. Hierfür umfasst der Lagesensor 21 mehrere Gleissensoren 23, die eine Position des Triebfahrzeugs 5 relativ zu den Gleisen 9 messen. Über den Lagesensor 21 können etwaige Nichtparallelitäten des Triebfahrzeugs 5 zu den Gleisen 9 ermittelt werden, die ebenfalls eine Ausrichtung des Zugverbands 1 darstellen können, die die Repräsentanz der Prüfsignale 17 der Profilsensoren 13 in Frage stellt.

Die Prüfeinrichtung 6 umfasst in der beispielhaften Ausführungsform der Figuren 1 bis 4 ferner eine Übertragungseinrichtung 24, durch die beispielsweise die Prüfsignale 17 oder andere Daten beispielsweise an eine nicht dargestellte Leitstelle übertragen werden können. Die Übertragungseinrichtung 24 ist vorzugsweise zum drahtlosen Übertragen beispielsweise über Datenfunk, GSM oder ähnlichem ausgebildet.

Während der Fahrt des Zugverbands 1 und im Betrieb der Prüfeinrichtung 6 detektieren die Profilsensoren 13 kontinuierlich eine Einhaltung oder Verletzung des Profils 7. Beim Detektieren werden bei der beispielhaften Ausführungsform der Figuren 1 bis 4 die Außenkonturen 14 der Fahrzeuge 4 des Zugverbands 1 erfasst und mit einem Zeitstempel versehen. Die Prüfsignale 17, beispielsweise Abbilder der Außenkonturen 14, werden in der Speichereinrichtung 18 abgelegt. Parallel erfasst die Ausrichtungseinheit 12 jeweils die aktuelle Ausrichtung des Zugverbands 1 und liefert diese Information als ein Ausrichtungssignal 25 an die Auswerteeinrichtung 11. Die Profilsensoren 13 ermitteln in der Regel ein gültiges Abbild der Außenkontur des Zugverbands 1, wenn die Fahrzeuge 4 des Zugverbands 1 beispielsweise geradeaus fahren und dadurch parallel zueinander ausgerichtet sind. Beispielsweise über den Lagesensor 21 können die Positionen und Winkellagen der Profilsensoren ermittelt werden, durch die auf eine Parallelstellung der Fahrzeuge 4 geschlossen werden kann. Somit liefert die Ausrichtungseinheit 12 über das Ausrichtungssignal 25 die Information an die Auswerteeinrichtung 11, wenn die Profilsensoren 13 ein für die Einhaltung oder Verletzung des Profils 7 repräsentatives Signal 17 geliefert haben können. So kann die Auswerteeinrichtung 11 die Prüfsignale 17 in Abhängigkeit vom Ausrichtungssignal 25 anhand der Zeitstempel auswerten und so das Profil 7 zuverlässig überwachen. Die Auswertung der Prüfsignale 17 erfolgt beispielsweise durch einen Vergleich mit abgespeicherten Bilder oder Daten des zulässigen Profils 7.

Verschiedene Profilsensoren 13 können verschiedene Segmente der Außenkontur 14 betrachten, so dass eine segmentspezifische Auswertung möglich ist. Segmente der Außenkontur 14 sind beispielsweise die Seiten oder das Dach der Fahrzeuge 4. Alternativ können einzelne Fahrzeuge auch Segmente bilden.

Bei einer ermittelten Verletzung des Profils 7 gibt die Prüfeinrichtung 6 ein Alarmsignal an den Triebfahrzeugführer und/oder über die Übertragungseinrichtung 24 an die Leitstelle. Zusätzlich kann auch eine automatische Bremsung des Zugverbands 1 eingeleitet werden.

Zusätzlich kann ein weiteres Alarmsignal ausgegeben werden, wenn über einen definierten Zeitraum keine Einhaltung des Profils 7 ermittelt werden konnte.

Durch die Speicherung der Prüfsignale 17 stehen diese auch zur Dokumentation für den gesamten Zeitraum einer Fahrt des Zugverbands 1 zur Verfügung. Mit der erfindungsgemäßen Prüfeinrichtung 6 können auch Veränderungen der Außenkontur 14 der Fahrzeuge 4 des Zugverbands 1 ermittelt werden, die zum Zeitpunkt des Erkennens noch keine Verletzung des Profils 7 bzw. des Lichtraumprofils 8 darstellen. Diese Veränderungen können beispielsweise ab einem parametrierbaren Umfang als Warnung an den Triebfahrzeugführer gemeldet werden.

## Patentansprüche

1. Prüfeinrichtung (6) zum Überwachen eines definierten Profils (7) von einem Zugverband (1) aus Fahrzeugen (4), insbesondere Schienenfahrzeugen,
mit wenigstens einer Sensoreinrichtung (10), die zum Detektieren einer Einhaltung oder Verletzung des Profils (7) ausgebildet ist, wobei die Sensoreinrichtung (10) am Zugverband (1) anbringbar ausgebildet ist, wobei die Prüfeinrichtung (6) eine Auswerteeinrichtung (11) aufweist, die zum Auswerten eines von der Sensoreinrichtung (10) ermittelten und für die Einhaltung oder Verletzung des Profils (7) repräsentativen Prüfsignals (17) wenigstens in Abhängigkeit von einer Ausrichtung des Zugverbandes (1) ausgebildet ist,
wobei die Prüfeinrichtung ausgebildet ist, selbständig zu erkennen, wenn oder wann eine Detektierung des Profils (7) durch die Sensoreinrichtung nicht möglich beziehungsweise fehlerhaft ist, und
die Prüfeinrichtung (6) wenigstens eine Ausrichtungseinheit (12) aufweist, die zum Ermitteln der Ausrichtung des Zugverbandes (1) oder wenigstens eines Fahrzeugs (4) des Zugverbandes (1) ausgebildet ist.

2. Prüfeinrichtung (6) nach Anspruch 1,
**dadurch gekennzeichnet, dass** die Ausrichtungseinheit (12) einen Kurvensensor (19) umfasst, der zum Ermitteln einer Kurvenfahrt von wenigstens einem Fahrzeug (4) des Zugverbandes (1) ausgebildet ist.

3. Prüfeinrichtung (6) nach Anspruch 1 oder 2,
**dadurch gekennzeichnet, dass** die Ausrichtungseinheit (12) einen Neigungssensor (20) umfasst, der zum Ermitteln einer Neigung von wenigstens einem Fahrzeug (4) des Zugverbandes (1) ausgebildet ist.

4. Prüfeinrichtung (6) nach einem der Ansprüche 1 bis 3, **dadurch gekennzeichnet, dass** die Ausrichtungseinheit (12) einen Lagesensor (21) umfasst, der eine Lage wenigstens eines Fahrzeugs des Zugverbandes relativ zum Gleis (9) ermittelt.

5. Prüfeinrichtung (6) nach einem der Ansprüche 1 bis 4, **dadurch gekennzeichnet, dass** die Ausrichtungseinheit (12) ein Gyroskop (22) umfasst.

6. Prüfeinrichtung (6) nach einem der oben genannten Ansprüche,
**dadurch gekennzeichnet, dass** die Sensoreinrichtung (10) wenigstens einen Profilsensor (13) zum Ermitteln der Außenkontur (14) wenigstens eines Fahrzeugs des Zugverbandes aufweist.

7. Prüfeinrichtung (6) nach einem der oben genannten Ansprüche,
**dadurch gekennzeichnet, dass** die Prüfeinrichtung (6) wenigstens eine zum Speichern von Prüfsignalen (17) ausgebildete Speichereinrichtung (18) umfasst.

8. Prüfeinrichtung (6) nach einem der oben genannten Ansprüche,
**dadurch gekennzeichnet, dass** die Prüfeinrichtung (6) wenigstens eine zum Übertragen, insbesondere zum drahtlosem Übertragen, von Prüfsignalen ausgebildete Übertragungseinrichtung (24) aufweist.

9. Prüfeinrichtung (6) nach einem der oben genannten Ansprüche,
**dadurch gekennzeichnet, dass** die Sensoreinrichtung zum Detektieren in der Längsrichtung des Zugverbands ausgebildet ist.

10. Fahrzeug (4, 5), insbesondere Schienenfahrzeug, aus einem Zugverband
**gekennzeichnet durch** eine Prüfeinrichtung (6) nach einem der oben genannten Ansprüche.

11. Fahrzeug (4, 5) nach Anspruch 10,
**dadurch gekennzeichnet, dass** die Sensoreinrichtung der Prüfeinrichtung mit einem Abstand zur Außenhaut des Fahrzeugs angeordnet ist.

12. Verfahren zur Überprüfung eines definierten Profils (7) von einem Zugverband (1) aus Fahrzeugen (4), insbesondere Schienenfahrzeugen,
bei dem eine Einhaltung oder Verletzung des Profils (7) detektiert wird, wobei
die Verletzung des Profils (7) vom Zugverband (1) aus detektiert wird wobei
ein ermitteltes und für die Einhaltung oder Verletzung des Profils (7) repräsentatives Prüfsignals (17) wenigstens in Abhängigkeit von einer Ausrichtung des Zugverbandes ausgewertet wird,
wobei selbständig erkannt wird, wenn oder wann eine Detektierung des Profils (7) nicht möglich beziehungsweise fehlerhaft ist.

## Claims

1. Testing device (6) for monitoring a defined profile (7) of a train (1) of vehicles (4), in particular rail vehicles, having at least one sensor device (10), which is designed to detect a compliance or non-compliance with the profile (7), wherein the sensor device (10) is designed such that it can be attached to the train (1), wherein
the testing device (6) has an evaluation device (11), which is designed to evaluate a test signal (17) that is determined by the sensor device (10) and is representative of the compliance or non-compliance with the profile (7), at least as a function of an orientation of the train (1), wherein
the testing device is designed to independently recognise if or when detection of the profile (7) by the sensor device is impossible or erroneous, and
the testing device (6) has at least one orientation unit (12), which is designed to determine the orientation of the train (1) or of at least one vehicle (4) of the train (1) .

2. Testing device (6) according to claim 1,
**characterised in that**
the orientation unit (12) comprises a curve sensor (19), which is designed to determine a curved direction of travel of at least one vehicle (4) of the train (1).

3. Testing device (6) according to claim 1 or 2,
**characterised in that**
the orientation unit (12) comprises a gradient sensor (20), which is designed to determine a gradient of at least one vehicle (4) of the train (1).

4. Testing device (6) according to one of claims 1 to 3, **characterised in that**
the orientation unit (12) comprises a location sensor (21), which determines a location of at least one vehicle of the train relative to the track (9).

5. Testing device (6) according to one of claims 1 to 4, **characterised in that**
the orientation unit (12) comprises a gyroscope (22).

6. Testing device (6) according to one of the preceding claims,
**characterised in that**
the sensor device (10) has at least one profile sensor (13) for determining the outer contour (14) of at least one vehicle of the train.

7. Testing device (6) according to one of the preceding claims,
**characterised in that**
the testing device (6) comprises at least one storage device (18) which is designed to store test signals (17).

8. Testing device (6) according to one of the preceding claims,
**characterised in that**
the testing device (6) has at least one transmission device (24) which is designed to transmit test signals, in particular wirelessly.

9. Testing device (6) according to one of the preceding claims,
**characterised in that**
the sensor device is designed for the purpose of detection in the longitudinal direction of the train.

10. Vehicle (4, 5), in particular a rail vehicle, in the form of a train
**characterised by**
the testing device (6) according to one of the preceding claims.

11. Vehicle (4, 5) according to claim 10,
**characterised in that**
the sensor device of the testing device is arranged at a distance from the outer skin of the vehicle.

12. Method for checking a defined profile (7) of a train (1) of vehicles (4), in particular rail vehicles,
in which a compliance or non-compliance with the profile (7) is detected, wherein
the non-compliance with the profile (7) is detected from onboard the train (1) itself, wherein
a test signal (17) is evaluated which has been determined and is representative of the compliance or non-compliance with the profile (7), at least as a function of an orientation of the train, wherein
it is independently recognised if or when detection of the profile (7) is impossible or erroneous.

## Revendications

1. Dispositif (6) de contrôle d'un profil (7) défini d'un convoi (1) de véhicules (4), notamment de véhicules ferroviaires, comprenant au moins un dispositif (10) de capteur, qui est constitué pour détecter que le profil (7) est conservé ou qu'il y est porté atteinte, dans lequel le dispositif (10) de capteur est constitué de manière à pouvoir être mis sur le convoi (1), dans lequel le dispositif (6) de contrôle a un dispositif (11) d'exploitation, qui est constitué pour l'exploitation, au moins en fonction d'une orientation du convoi (1), d'un signal (17) de contrôle déterminé par le dispositif (10) de capteur et représentatif du fait que le profil (7) est conservé ou qu'il y est porté atteinte, dans lequel
le dispositif de contrôle est constitué pour détecter de manière autonome si ou quand une détection du profil (7) par le dispositif de capteur n'est pas possible ou est défectueuse, et
le dispositif (6) de contrôle a au moins un dispositif (12) d'orientation, qui est constitué pour la détermination de l'orientation du convoi (1) ou au moins d'un véhicule (4) du convoi (1).

2. Dispositif (6) de contrôle suivant la revendication 1, **caractérisé en ce que**
l'unité (12) d'orientation comprend un capteur (19) de courbe, qui est constitué pour la détermination d'un trajet en courbe d'au moins un véhicule (4) du convoi (1).

3. Dispositif (6) de contrôle suivant la revendication 1 ou 2, **caractérisé en ce que**
l'unité (12) d'orientation comprend un capteur (20) d'inclinaison, qui est constitué pour la détermination d'une inclinaison d'au moins un véhicule (4) du convoi (1).

4. Dispositif (6) de contrôle suivant l'une des revendications 1 à 3,
**caractérisé en ce que**
l'unité (12) d'orientation comprend un capteur (21) de position, qui détermine une position d'un véhicule du convoi par rapport à la voie (9).

5. Dispositif (6) de contrôle suivant l'une des revendications 1 à 4,
**caractérisé en ce que**
l'unité (12) d'orientation comprend un gyroscope (22).

6. Dispositif (6) de contrôle suivant l'une des revendications précédentes,
**caractérisé en ce que**
le dispositif (10) de capteur a au moins un capteur (13) de profil pour la détermination du contour (14) extérieur d'au moins un véhicule du convoi.

7. Dispositif (6) de contrôle suivant l'une des revendications précédentes,
**caractérisé en ce que**
le dispositif (6) de contrôle comprend au moins un dispositif (18) de mise en mémoire constitué pour la mise en mémoire de signaux (17) de contrôle.

8. Dispositif (6) de contrôle suivant l'une des revendications précédentes,
**caractérisé en ce que**
le dispositif (6) de contrôle a au moins un dispositif (24) de transmission constitué pour transmettre, notamment pour transmettre sans fil, des signaux de contrôle.

9. Dispositif (6) de contrôle suivant l'une des revendications précédentes,
**caractérisé en ce que**
le dispositif de capteur est constitué pour la détection dans la direction longitudinale du convoi.

10. Véhicule (4, 5), notamment véhicule ferroviaire, composé d'un convoi,
**caractérisé par**
un dispositif (6) de contrôle suivant l'une des revendications précédentes.

11. Véhicule (4, 5) suivant la revendication 10,
**caractérisé en ce que**
le dispositif de capteur du dispositif de contrôle est disposé à distance de la peau extérieure du véhicule.

12. Procédé de contrôle d'un profil (7) défini d'un convoi (1) de véhicules (4), notamment de véhicules ferroviaires,
dans lequel on détecte si le profil (7) est conservé ou s'il y est porté atteinte, dans lequel
on détecte qu'il est porté atteinte au profil (7) du convoi (1) dans lequel
on exploite au moins en fonction d'une orientation du convoi un signal (17) de contrôle déterminé et représentatif, que le profil (7) est conservé ou qu'il y est porté atteinte,
dans lequel
on détecte, de manière autonome, si ou quand une détection du profil (7) n'est pas possible ou est défectueuse.
